# EUROPÄISCHE PATENTSCHRIFT

(11) **EP 2 466 024 B1**
(45) Veröffentlichungstag und Bekanntmachung des Hinweises auf die Patenterteilung: **24.08.2016**
(21) Anmeldenummer: 11401645.4
(22) Anmeldetag: 01.12.2011
(51) Int. Cl.: E04B 1/76, F16B 5/01, F16B 5/02, F16B 13/00, F16B 37/12

(54) **Anker und Befestigungsanordnung für thermisch isolierte Wände**
Anchor and fastening device for thermally insulated walls
Ancre et agencement de fixation pour parois à isolation thermique

(30) Priorität: 20.12.2010 DE 102010061344
(43) Veröffentlichungstag der Anmeldung: 20.06.2012
(60) Teilanmeldung: 16165032.0
(73) Patentinhaber: fischerwerke GmbH & Co. KG, 72178 Waldachtal (DE)
(72) Erfinder: Burkhardt, Frank, 72250 Freudenstadt (DE)

(56) Entgegenhaltungen:
- EP-A2- 1 293 685
- DE-A1- 2 739 146
- DE-A1-102005 022 449
- DE-U1- 20 005 166
- DE-U1- 20 016 198

## Beschreibung

Die Erfindung betrifft einen Anker mit den Merkmalen des Oberbegriffs des Anspruchs 1 und eine Befestigungsanordnung für thermisch isolierte Wände mit den Merkmalen des Oberbegriffs des Anspruchs 7.

Aus der Druckschrift DE 10 2005 022 449 A1 ist eine Befestigungsanordnung bekannt, mit der ein Anbauteil, beispielsweise eine Konsole für eine Markise, an einer Wand mit einer thermisch isolierenden Schicht und einem hierauf aufgebrachten Putz befestigt werden kann. Zur Erstellung der Befestigungsanordnung wird ein Loch durch den Putz und die Isolierschicht bis in den Befestigungsgrund gebohrt und eine Ankerstange mit einer Siebhülse und einer aushärtbaren chemischen Befestigungsmasse in diesem Loch verankert. Zuvor wird mit einem thermischen Trennelement, welches auch als Fräser ausgebildet ist, der Bohrlochmund konisch aufgefräst. Das thermische Trennelement ist an der Ankerstange aus Stahl befestigt und schließt außen mit der Putzschicht ab. Es verhindert, dass es vom Gebäudeinneren über den Befestigungsgrund und die Ankerstange zu einem Wärmefluss zur Gebäudeaußenseite kommt. An dem der Ankerstange abgewandten Ende des thermischen Trennelements kann ein Anbauteil mittels Schrauben befestigt werden. DE 102005022449 A1 offenbart alle Merkmale des einleitenden Teils des Anspruchs 1.

Nachteilig an einer derartigen Befestigungsanordnung ist, dass das Anbauteil erst nach der Montage der Ankerstange und des thermischen Trennelements aufgesetzt werden kann. Eine nachträgliche, zusätzliche Befestigung an einem weiteren Befestigungspunkt ist somit beispielsweise nicht möglich, ohne dass das Anbauteil abmontiert wird.

Aufgabe der Erfindung ist daher, einen Anker bzw. eine Befestigungsanordnung für thermisch isolierte Wände zu schaffen, bei der die Montage bei aufgesetztem Anbauteil erfolgen kann.

Diese Aufgabe wird erfindungsgemäß durch die Merkmale des Anspruchs 1 und des Anspruchs 7 gelöst. Die Erfindung sieht einen Anker zur Befestigung eines Anbauteils an einer thermisch isolierten Wand vor mit einer Ankerstange zur Verankerung in einem Befestigungsgrund. Mit einer thermisch isolierten Wand ist insbesondere eine Außenwand eines Gebäudes gemeint, möglich ist aber auch eine Gebäudeinnenwand, beispielsweise bei Kühlräumen. Die Isolierung besteht aus einer thermischen Dämmschicht mit niedrigem Wärmedurchgangskoeffizienten, beispielsweise aus Polystyrol oder Mineralwolle. Es kann sich um eine thermische Dämmschicht auf der Gebäudeaußen- oder innenseite handeln. Die Isolierung ist auf den, insbesondere tragenden, festen Teil der Wand aufgebracht, der den Befestigungsgrund für die Verankerung bildet. Die Ankerstange ist insbesondere eine Gewindestange aus Stahl, denkbar sind aber auch andere Materialien und Formen. Mit der Ankerstange verbunden ist ein thermisches Trennelement, also ein Bauteil mit geringeren Wärmedurchgang als die Ankerstange. Auf der der Ankerstange abgewandten Seite weist das Trennelement insbesondere eine Aufnahme für ein Anschlussstück, also beispielsweise ein Gewinde für eine Schraube oder Gewindestange als Anschlussstück auf.

Der erfindungsgemäße Anker umfasst außerdem eine Siebhülse zur chemischen Verankerung mittels einer aushärtbaren, chemischen Befestigungsmasse im Befestigungsgrund. Derartige Siebhülsen sind allgemein zur Befestigung insbesondere in Hohlbaustoffen bekannt und meist aus Kunststoff oder Stahl gefertigt.

Die Erfindung schlägt vor, dass der maximale äußere Durchmesser des thermischen Trennelements im Wesentlichen dem maximalen äußeren Durchmesser der Siebhülse entspricht. Mit "im Wesentlichen" ist gemeint, dass die Durchmesser nicht mehr als 20 %, insbesondere nicht mehr als 10 % voneinander abweichen. Mit dem Ausdruck "Durchmesser" ist der Durchmesser eines umschreibenden Kreises gemeint. Der Querschnitt muss also nicht kreisrund sein. Da diese beiden Durchmesser bestimmend für den Bohrlochdurchmesser sind, ermöglicht ein derartiger Anker das Setzen durch ein Anbauteil hindurch, ohne dass das Anbauteil abgenommen werden muss. Das Bohrloch kann durch das Anbauteil hindurch gebohrt werden, wobei das Anbauteil bereits ein Loch aufweisen kann, oder das Loch im Anbauteil wird gleich mit erstellt. Siebhülse, Ankerstange und thermisches Trennelement können dann, ohne das Anbauteil abnehmen zu müssen, in das Bohrloch eingebracht werden. Durch die Durchmesserentsprechung von thermischem Trennelement und Siebhülse kann der Bohrlochdurchmesser so gewählt werden, dass die Siebhülse insbesondere leicht klemmend im Bohrloch gehalten wird, so lange die chemische Befestigungsmasse noch nicht ausgehärtet ist. Gleichzeitig nutzt das thermische Trennelement den vorhandenen Querschnitt maximal aus. Da das thermische Trennelement vorzugsweise aus faserverstärktem Kunststoff, beispielsweise einem glasfaserverstärkten Polyamid, gefertigt ist, wird die Tragfähigkeit des Ankers in vielen Fällen von der Stabilität des thermischen Trennelements bestimmt, weshalb ein möglichst großer Querschnitt von Bedeutung ist.

In einer bevorzugten Ausführungsform weist die Siebhülse ein Manipulierelement auf, das in Längsrichtung des Ankers über das thermische Trennelement hinausragt. Das Manipulierelement ist insbesondere langgestreckt und einstückig mit der Siebhülse, wozu sich die Fertigung aus Kunststoff anbietet. Das Manipulierelement ist insbesondere so gestaltet, dass es das Verschieben und Halten der Siebhülse im Bohrloch von außerhalb erlaubt. Dadurch kann vermieden werden, dass die Siebhülse insbesondere bei Hohlbaustoffen unabsichtlich zu tief in den Befestigungsgrund geschoben wird. Dies könnte beim ersten Einschieben geschehen, aber auch beim Injizieren der chemischen Befestigungsmasse. Im Extremfall könnte die Siebhülse sogar in einen Hohlraum fallen, so dass sie nicht mehr nutzbar ist. Bei handelsüblichen Siebhülsen wird dies durch einen umlaufenden Kragen verhindert, der sich außen am Befestigungsgrund abstützt. Diese Möglichkeit steht jedoch aufgrund der davorliegenden thermischen Dämmschicht nicht zur Verfügung. Mit dem Manipulierelement kann der Bediener die Siebhülse selbst halten bzw. wieder zurückziehen.

Um das Manipulierelement an dem thermischen Trennelement vorbei zu führen, weist das thermische Trennelement eine in Längsrichtung des Ankers verlaufende Aussparung zur Aufnahme des Manipulierelements auf. Dies ermöglicht, dass das Trennelement ansonsten einen maximalen Querschnitt aufweist, was aus den genannten Stabilitätsgründen von Vorteil ist.

Vorteilhafterweise weist das thermische Trennelement eine umlaufende Durchmesserverjüngung auf, beispielsweise im Form einer umlaufenden Nut. Im Einbauzustand kann die Nut im Bereich des Putzes angeordnet werden, so dass ein umlaufender Ringspalt zum Putz entsteht. Bei einer lastbedingten Durchbiegung des Ankers hat dies zur Folge, dass der Anker nicht auf dem Putz aufsitzt und es zu Rissen im Putz kommt.

In einer bevorzugten Ausführungsform weist das thermische Trennelement am Außenumfang mindestens ein umlaufendes Dichtelement auf. Das Dichtelement kann insbesondere dazu dienen, den Anker gegen das Anbauteil zu dichten, so dass von außen kein Wasser durch das Loch im Anbauteil in das Bohrloch dringt. Alternativ oder zusätzlich kann aber auch eine Abdichtung gegen den Putz oder die thermische Dämmschicht vorgesehen werden.

Vorzugsweise ist das thermische Trennelement gegenüber der Ankerstange axial verstellbar. Wird der Anker so montiert, das das Trennelement außen mit dem Anbauteil abschließt, ermöglicht die axiale Verstellbarkeit, dass das thermische Trennelement nach dem Aushärten der chemischen Befestigungsmasse als verstellbarer Anschlag für eine Schraube mit Unterlegscheibe oder dgl. dient. So kann das thermische Trennelement beispielsweise etwas in das Anbauteil hineingedreht werden, um das Anbauteil dann mit einer in das thermische Trennelement geschraubten Schraube mit Unterlegscheibe an die Wand zu ziehen - allerdings nur so weit, bis die Unterlegscheibe am thermischen Trennelement zur Anlage kommt. Durch die Verstellung kann somit insbesondere bei Anbauteilen aus weicherem Material, wie Holz, gesteuert werden, wie stark das Anbauteil gegen die Wand gezogen wird.

Die erfindungsgemäße Befestigungsanordnung umfasst neben dem beschriebenen Elementen Befestigungsgrund, Dämmschicht und Anbauteil einen Anker mit einer im Befestigungsgrund verankerten Ankerstange auf. Der Anker weist erfindungsgemäß mindestens die im Anspruch 1 aufgeführten Merkmale auf. Mit der Ankerstange ist, wie bereits beschrieben, ein thermisches Trennelement verbunden. Auf der der Ankerstange entgegen gesetzten Seite ist das thermische Trennelement mit einem Anschlusstück verbunden. Das Anschlussstück ist insbesondere eine Schraube oder ein Gewindebolzen und ragt durch das Loch im Anbauteil hindurch. Damit ist gemeint, dass in Längsrichtung des Ankers gesehen zumindest ein Teil des Anschlusstücks im Bereich des Anbauteils angeordnet ist, während ein anderer Teil auf der der Wand abgewandten Seite über das Anbauteil heraussteht. Erfindungsgemäß ist der maximale äußere Durchmesser des thermischen Trennelements kleiner oder gleich dem Durchmesser des Lochs im Anbauteil. Aufgrund der beschriebenen mechanischen Anforderungen an die Stabilität des thermischen Trennelements sollte dieses einen möglichst großen Querschnitt aufweisen. Die Begrenzung auf den Durchmesser des Lochs bewirkt, dass das Trennelement dennoch in das Anbauteil oder sogar durch es hindurch gesteckt werden kann, so dass das Anbauteil zur Erstellung der Befestigungsanordnung nicht von der Wand abgenommen werden muss. Ohne den Erfindungsgedanken zu verlassen, kann dennoch ein Kragen am thermischen Trennelement vorgesehen sein, der den Durchmesser des Lochs überschreitet, um die Einschubbewegung zu begrenzen, wie dies auch bei einem Rahmendübel üblich ist.

Vorzugsweise ist das thermische Trennelement im Bereich des Anbauteils angeordnet. Damit ist gemeint, dass sich in Längsrichtung des Ankers gesehen zumindest ein Teil des thermischen Trennelements im Loch im Anbauteil befindet. Gegenüber einer Anordnung näher am Befestigungsgrund hat dies den Vorteil, dass das Biegemoment in diesem Bereich geringer ist. Da materialbedingt das thermische Trennelement am ehesten eine Schwachstelle darstellt, wirkt sich eine derartige Anordnung somit günstig auf das Tragverhalten der Befestigungsanordnung aus.

Alternativ oder zusätzlich ist das thermische Trennelement im Bereich der thermischen Dämmschicht angeordnet. Dies hat den Vorteil, dass die thermische Trennung verbessert und hierdurch die Gefahr von Tauwasserbildung am Anker reduziert wird. Außerdem kann das thermische Trennelement zusätzlich zur Abdichtung in der Dämmschicht genutzt werden, wie bereits beschrieben. Weiterhin können Ankerstange und thermisches Trennelement so in ihrer Länge bestimmt werden, dass sie für eine Vielzahl unterschiedlicher Dämmschichtdicken und Anbauteildicken geeignet sind. Im Gegensatz zu einer Anordnung, bei der das thermische Trennelement mit dem Anbauteil außen abschließt, kann so die Ausbildung vieler Varianten vermieden werden. Die Anpassung kann in diesem Fall rein durch das Anschlussstück, also insbesondere über unterschiedlich lange Schrauben, erfolgen.

Um das Eindringen von Wasser in das Bohrloch mit der Folge von Schimmelbildung oder dgl. zu vermeinden, schlägt die Erfindung außerdem vor, dass eine Dichtung zwischen dem Anbauteil und einem auf der Dämmschicht aufgebrachten Putz angeordnet ist. Die Dichtung kann beispielsweise in Form einer um das Bohrloch verlaufenden Silikonraupe ausgeführt werden.

Die Erfindung wird nachfolgend anhand eines Ausführungsbeispiels näher erläutert.

Es zeigen:
- Figur 1a- 1c: den Montageablauf in vereinfachter Schnittdarstellung bei versenktem thermischen Trennelement;
- Figur 2: die erfindungsgemäß erstellte Befestigungsanordnung bei Bündigmontage des thermischen Trennelements in Schnittdarstellung;
- Figur 3: die Siebhülse in perspektivischer Einzeldarstellung; und
- Figur 4: das thermische Trennelement in perspektivischer Einzeldarstellung.

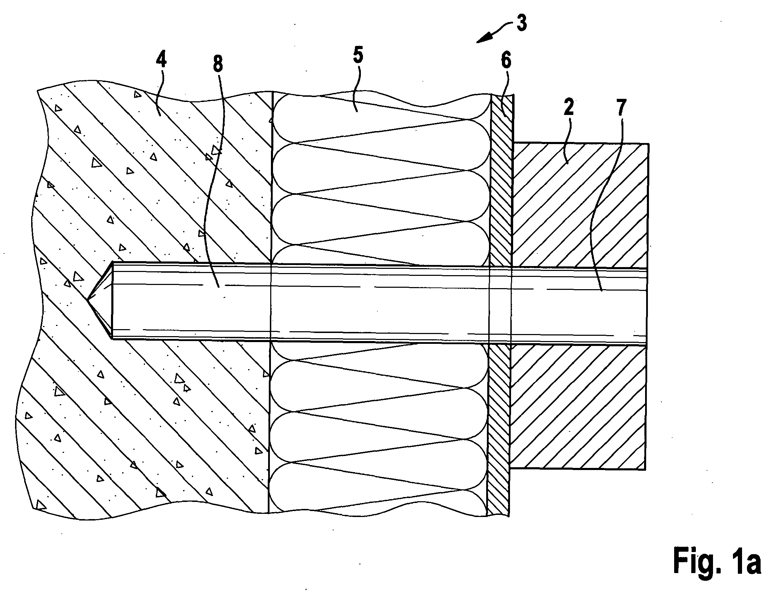

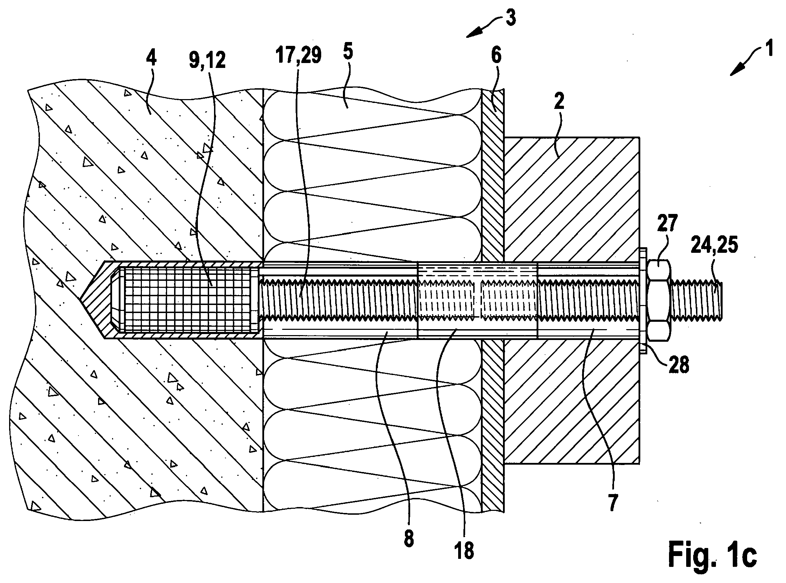

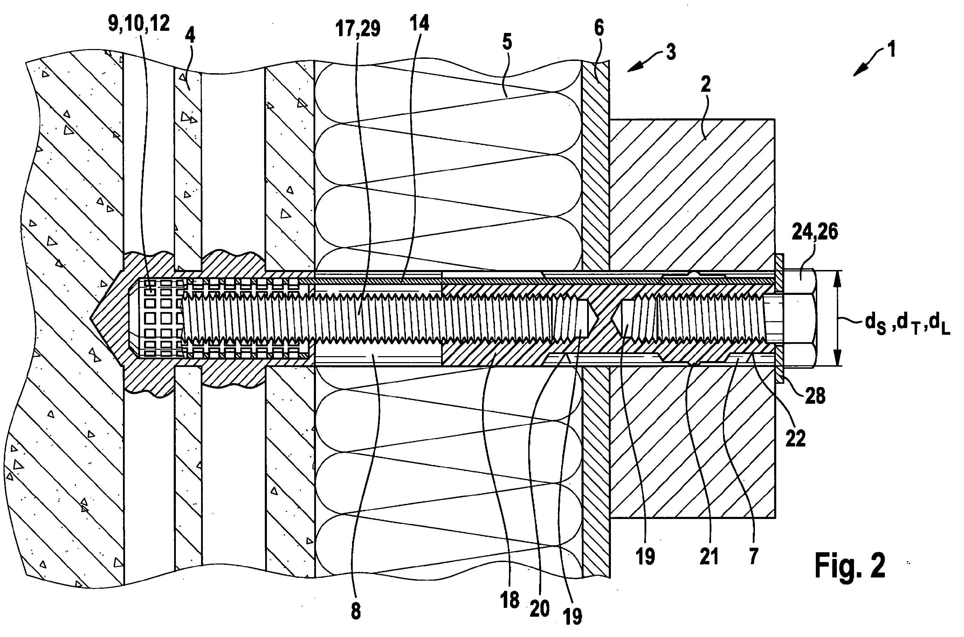

Die erfindungsgemäße Befestigungsanordnung 1, wie sie in den Figuren 1c und 2 dargestellt ist, dient der Befestigung eines Anbauteils 2, beispielsweise eines Holzbalkens, an einer isolierten Wand 3. Die Wand 3 weist einen Befestigungsgrund 4 auf, der den tragenden Teil der Wand 3 ausmacht. Es kann sich dabei beispielsweise um Beton handeln, wie in den Figuren 1a - 1c dargestellt, oder ein Mauerwerk aus Hochlochsteinen, wie in Figur 2 dargestellt. Auf den Befestigungsgrund 4 ist eine thermische Dämmschicht 5 aus Polystyrol geklebt und auf diese thermische Dämmschicht 5 wiederum ein Putz 6.

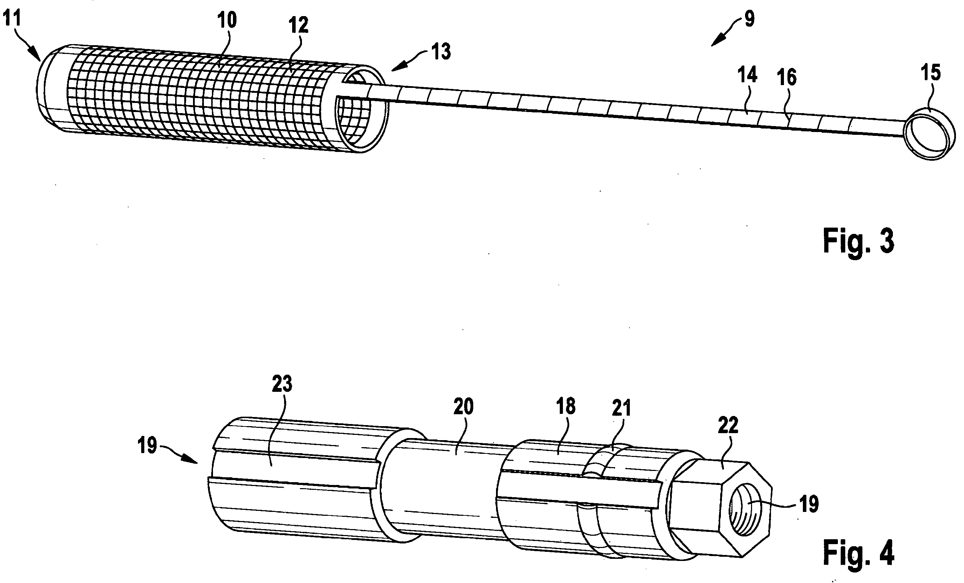

Zur Erstellung der Befestigungsanordnung 1 wird zunächst das Anbauteil 2 auf die Wand 3 aufgesetzt. Das Anbauteil 2 hat ein bereits vorgefertigtes Loch 7, durch das hindurch ein Bohrloch 8 bis in den Befestigungsgrund 1 gebohrt wird (siehe Figur 1a). Danach wird eine Siebhülse 9 in das Bohrloch 8 eingeschoben. Im Weiteren ist mit "vorne" die in Einschieberichtung vordere Seite gemeint. Wie in Figur 3 genauer dargestellt, weist die Siebhülse 9 einen zylindrischen Grundkörper 10 auf, der an seinem vorderen Ende 11 geschlossen ist, während seine Mantelfläche siebartig Öffnungen 12 aufweist. An seinem hinteren Ende 12 schließt sich an den Grundkörper 10 in Längsrichtung ein stabförmiges Manipulierelement 14 an, an dessen hinteren Ende ein Greifring 15 ausgebildet ist. Entlang des Manipulierelements 14 ist außerdem eine Skala 16 in Form von Einkerbungen mit Maßangaben (nicht dargestellt) angeordnet. Am Greifring 14 kann das Manipulierelement 14 gut gegriffen werden. Die Skala 16 dient dazu, dass die Siebhülse 9 entsprechend der Abmessungen der thermischen Dämmschicht 5, des Putzes 6 und des Anbauteils 2 gezielt so tief in das Bohrloch 8 eingeschoben werden kann, dass das hintere Ende 13 des Grundkörpers 10 etwa mit dem Befestigungsgrund 4 abschließt.

Im nächsten Schritt wird mit einer Injektionsdüse eine chemische Befestigungsmasse in die Siebhülse 9 injiziert (nicht dargestellt). Hierbei dient das Manipulierelement 14 dazu, die Siebhülse 9 gegen Verrutschen zu sichern. Dies gilt auch für den darauffolgenden Schritt, in dem eine Ankerstange 17 in Form einer Gewindestange aus Stahl in die Siebhülse 9 im Bohrloch 8 geschoben wird. Da bei diesem Vorgang die chemische Befestigungsmasse verdrängt und teilweise durch die Öffnungen 12 geschoben wird, besteht gerade bei diesem Schritt ansonsten die Gefahr, dass die Siebhülse 9 verschoben wird. Danach wird das Manipulierelement 14 an der Lochmündung, hier mit Pfeil S bezeichneten Stelle abgeschnitten.

Auf das hintere Ende der Ankerstange 17 ist ein thermisches Trennelement 18 aus glasfaserverstärktem Polyamid aufgeschraubt. Ankerstange 17, Siebhülse 9 und thermisches Trennelement 18 bilden zusammen einen Anker 29. Das thermische Trennelement 18 hat eine zylindrische Grundform mit je einer Gewindebohrung 19 an jedem Ende, wobei die beiden Gewindebohrungen 19 miteinander fluchten und jeweils als Sacklöcher ausgeführt sind. Die äußere Kontur des thermischen Trennelements 18 ist in den Figuren 1a - 1c vereinfacht dargestellt. Wie in Figur 4 dargestellt, weist das thermische Trennelement 18 etwa mittig eine umlaufende Durchmesserverjüngung 20 auf. Hinter dieser Durchmesserverjüngung 20 ist ein wulstartiges, umlaufendes Dichtelement 21 angeformt. Am hinteren Ende geht das thermische Trennelement 18 in einen Sechskant 22 über. In Längsrichtung verläuft eine Aussparung 23 in Form einer Nut mit Rechteckquerschnitt, welcher dem Manipulierelement 14 entspricht und zu dessen Aufnahme dient.

Die Montage von Siebhülse 9 und thermischem Trennelement 18 bei aufgesetztem Anbauteil 2 ist deshalb möglich, weil sich die maximalen Durchmesser der Siebhülse d_{S}, des thermischen Trennelements d_{T} und des Lochs d_{L} im Wesentlichen entsprechen. Die dargestellten geringen Abweichungen sind zu vernachlässigen. Gleichzeitig kann eine relativ durchmesserstarke Ankerstange 17 zum Einsatz kommen, so das Montagefreundlichkeit und hohe Haltewerte kombiniert werden.

Als ein Anschlussstück 24 ist in das hintere Ende des thermischen Trennelements 18 in Figur 1c ein Gewindestück 25 und in Figur 2 eine Schraube 26 eingeschraubt.

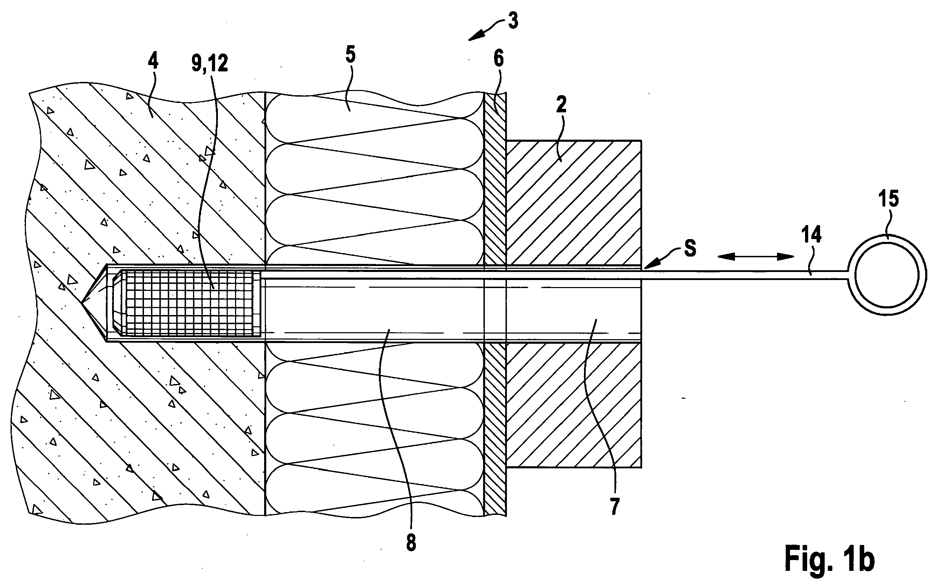

Im Falle der Montage entsprechend der Figuren 1a - 1c ist das thermische Trennelement 18 so kurz, dass das thermische Trennelement 18 sowohl im Bereich der thermischen Dämmschicht 5 und dem Anbauteil 2 angeordnet ist, jedoch am hinteren Ende nicht mit dem Anbauteil 2 abschließt, wie dies in Figur 2 dargestellt ist. Entsprechend kann im ersten Fall von einem versenkten thermischen Trennelement 18 und im zweiten Fall von einer Bündigmontage gesprochen werden. In Figur 1c ist gezeigt, dass das Anbauteil 2 nach dem Aushärten der chemischen Befestigungsmasse mittels einer Mutter 27 und Unterlegscheibe 28 gegen den Putz 6 angezogen wird. Der Vorteil einer solchen Anordnung ist, dass sowohl die Ankerstange 17 als auch das thermische Trennelement für viele unterschiedliche Dämmschichtdicken und Anbauteildicken verwendet werden können und die Anpassung lediglich über das Gewindestück 25 erfolgt. Auch erfolgt die thermische Trennung im Bereich der thermischen Dämmschicht 5, wodurch die Bildung von Tauwasser mit der Gefahr von Schimmelbildung und Abzeichnungen in diesem Bereich vermieden wird. Bei sehr hohen Drehmomenten kann jedoch die Gefahr bestehen, dass beim Anziehen der Mutter 27 der Putz 6 eingedrückt wird. Der Vorteil einer Bündigmontage ist dagegen, dass das thermische Trennelement 18 auch als Anschlag für die Schraube 26 dienen kann und somit die Gefahr des Eindrückens des Putzes 6 verringert wird. Dadurch das das thermische Trennelement 18 wie in Figur 2 dargestellt ebenfalls bis in die thermische Dämmschicht ragt, wird das beschriebene Problem der Tauwasserbildung ebenfalls vermieden. Um die Position dieses Anschlags auch noch nach dem Aushärten der chemischen Befestigungsmasse verstellen zu können, kann das thermische Trennelement 18 mit Hilfe einer Drehung am Sechskant 22 axial gegenüber der Ankerstange 17 verstellt werden. Die vordere Gewindebohrung 19 ist so ausgelegt, dass ein Verstellen des thermischen Trennelements 18 mit etwas erhöhtem Drehmoment möglich ist, dass das thermische Trennelement 18 beim Eindrehen der Schraube 26 aber auch nicht mitdreht. Hierzu könnte für die hintere Gewindebohrung 19 auch ein kleinerer Durchmesser gewählt werden. Alternativ könnte ein Ring mit äußeren Drehsicherungsrippen auf den Sechskant 22 aufgesteckt werden, der zusätzlich eine Dichtfunktion übernimmt (nicht dargestellt). Bereits vor dem Aufschrauben der Schraube 26 bzw. der Mutter 27 wird das hintere Ende des Manipulierelements entsprechend Pfeil S in Figur 1b gekappt.

Zur Bildung einer Dichtung gegen Feuchtigkeit, die in die thermische Dämmschicht 5 eindringen könnte, wird vor dem Aufsetzen des Anbauteils 2 auf den Putz 6 eine Silikonraupe (nicht dargestellt) putzseitig auf das Anbauteil 2 um das Loch 7 herum aufgetragen. Weiterhin kann Silikon im Bereich der Unterlegscheibe 28 bzw. des Anschlussstücks 24 zur Abdichtung verwendet werden.

Bei einer lastbedingten Kraft senkrecht zur Längsachse des Ankers 29 wird sich stets eine mehr oder weniger starke Durchbiegung des Ankers 29 ergeben. Die Durchmesserverjüngung 20, die wie in Figur 2 dargestellt im Bereich des Putzes 6 angeordnet ist, verhindert dabei, dass das thermische Trennelement 18 auf den relativ spröden Putz 6 drückt. Hierdurch werden Risse und somit eindringende Feuchtigkeit im Putz 6 vermieden.

### Bezugszeichenliste

**Anker und Befestigungsanordnung für thermisch isolierte Wände**
- 1: Befestigungsanordnung
- 2: Anbauteil
- 3: Wand
- 4: Befestigungsgrund
- 5: thermische Dämmschicht
- 6: Putz
- 7: Loch
- 8: Bohrloch
- 9: Siebhülse
- 10: Grundkörper
- 11: vorderes Ende des Grundkörpers 10
- 12: Öffnung
- 13: hinteres Ende des Grundkörpers 10
- 14: Manipulierelement
- 15: Greifring
- 16: Skala
- 17: Ankerstange
- 18: thermisches Trennelement
- 19: Gewindebohrung
- 20: Durchmesserverjüngung
- 21: Dichtelement
- 22: Sechskant
- 23: Aussparung
- 24: Anschlussstück
- 25: Gewindestück
- 26: Schraube
- 27: Mutter
- 28: Unterlegscheibe
- 29: Anker
- d_{S}: maximaler Durchmesser der Siebhülse
- d_{T}: maximaler Durchmesser des thermischen Trennelements
- d_{L}: maximaler Durchmesser des Lochs

## Patentansprüche

1. Anker (29) zur Befestigung eines Anbauteils (2) an einer thermisch isolierten Wand (3) mit
- einer Ankerstange (17) zur Verankerung in einem Befestigungsgrund (4),
- einem mit der Ankerstange (17) verbundenen thermischen Trennelement (18) und
- mit einer Siebhülse (9),
**dadurch gekennzeichnet, dass** der maximale äußere Durchmesser des Trennelements (d_{T}) im Wesentlichen dem maximalen äußeren Durchmesser der Siebhülse (d_{S}) entspricht.

2. Anker nach Anspruch 1, **dadurch gekennzeichnet, dass** die Siebhülse (9), insbesondere einstückig, ein Manipulierelement (14) aufweist, das in Längsrichtung des Ankers (29) über das thermische Trennelement (18) hinausragt.

3. Anker nach Anspruch 2, **dadurch gekennzeichnet, dass** das thermische Trennelement (18) eine in Längsrichtung des Ankers (29) verlaufende Aussparung (23) zur Aufnahme des Manipulierelements (14) aufweist.

4. Anker nach einem der Ansprüche 1 bis 3, **dadurch gekennzeichnet, dass** das thermische Trennelement (18) eine umlaufende Durchmesserverjüngung (20) aufweist.

5. Anker nach einem der Ansprüche 1 bis 4, **dadurch gekennzeichnet, dass** das thermische Trennelement (18) am Außenumfang ein umlaufendes Dichtelement 21) aufweist.

6. Anker nach einem der Ansprüche 1 bis 5, **dadurch gekennzeichnet, dass** das thermische Trennelement (18) gegenüber der Ankerstange (17) axial verstellbar ist.

7. Befestigungsanordnung (1) mit
- einem Befestigungsgrund (4),
- einer auf den Befestigungsgrund (4) aufgebrachten thermischen Dämmschicht (5),
- einem Anbauteil (2),
- einem Anker (29) nach einem der Ansprüche 1 bis 6, der eine im Befestigungsgrund (4) verankerte Ankerstange (17) und ein mit der Ankerstange (17) verbundenes thermisches Trennelement (18) aufweist, und
- ein Anschlussstück (24), das durch ein Loch (7) im Anbauteil (2) hindurch ragt und mit dem thermischen Trennelement (18) verbunden ist,
**dadurch gekennzeichnet, dass** der maximale äußere Durchmesser des thermischen Trennelements (d_{T}) im Wesentlichen über die ganze Länge kleiner oder gleich dem Durchmesser des Lochs (d_{L}) ist.

8. Befestigungsanordnung nach Anspruch 7, **dadurch gekennzeichnet, dass** das thermische Trennelement (18) im Bereich des Anbauteils (2) angeordnet ist.

9. Befestigungsanordnung nach Anspruch 7 oder 8, **dadurch gekennzeichnet, dass** das thermische Trennelement (18) im Bereich der thermischen Dämmschicht (5) angeordnet ist.

10. Befestigungsanordnung nach einem der Ansprüche 7 bis 9, **dadurch gekennzeichnet, dass** auf der thermischen Dämmschicht (5) ein Putz (6) aufgebracht ist und dass zwischen Anbauteil (2) und Putz (6) eine um den Anker (29) verlaufende Dichtung angeordnet ist.

## Claims

1. Anchor (29) for fixing an attached part (2) to a thermally insulated wall (3), having
- an anchor rod (17) for anchoring in a fixing substrate (4),
- a thermal separating element (18) connected to the anchor rod (17) and
- having a perforated sleeve (9),
**characterised in that** the maximum outer diameter of the separating element (d_{T}) corresponds substantially to the maximum outer diameter of the perforated sleeve (d_{S}).

2. Anchor according to claim 1, **characterised in that** the perforated sleeve (9) has, especially integrally, a manipulating element (14) which projects beyond the thermal separating element (18) in the longitudinal direction of the anchor (29).

3. Anchor according to claim 2, **characterised in that** the thermal separating element (18) has a recess (23) running in the longitudinal direction of the anchor (29) for receiving the manipulating element (14).

4. Anchor according to any one of claims 1 to 3, **characterised in that** the thermal separating element (18) has a circumferential reduction in diameter (20).

5. Anchor according to any one of claims 1 to 4, **characterised in that** the thermal separating element (18) has a circumferential sealing element (21) on its external circumference.

6. Anchor according to any one of claims 1 to 5, **characterised in that** the thermal separating element (18) is displaceable axially with respect to the anchor rod (17).

7. Fixing arrangement (1) having
- a fixing substrate (4),
- a thermal insulating layer (5) applied to the fixing substrate (4),
- an attached part (2),
- an anchor (29) according to any one of claims 1 to 6, which has an anchor rod (17) anchored in the fixing substrate (4) and a thermal separating element (18) connected to the anchor rod (17), and
- a connection piece (24) which projects through a hole (7) in the attached part (2) and is connected to the thermal separating element (18),
**characterised in that** the maximum outer diameter of the thermal separating element (d_{T}) is smaller than or equal to the diameter of the hole (d_{L}) over substantially the entire length.

8. Fixing arrangement according to claim 7, **characterised in that** the thermal separating element (18) is arranged in the region of the attached part (2).

9. Fixing arrangement according to claim 7 or 8, **characterised in that** the thermal separating element (18) is arranged in the region of the thermal insulating layer (5).

10. Fixing arrangement according to any one of claims 7 to 9, **characterised in that** a render (6) is applied to the thermal insulating layer (5), and a seal running around the anchor (29) is arranged between the attached part (2) and the render (6).

## Revendications

1. Tirant d'ancrage (29) conçu pour fixer une partie structurelle rapportée (2) à une paroi (3) isolée thermiquement, comprenant
- une tige d'ancrage (17) dévolue à l'ancrage dans une base de fixation (4),
- un élément (18) de séparation thermique, relié à ladite tige d'ancrage (17), et
- une douille ajourée (9),
**caractérisé par le fait que** le diamètre extérieur maximal (d_{T}) de l'élément de séparation correspond, pour l'essentiel, au diamètre extérieur maximal (d_{S}) de la douille ajourée.

2. Tirant d'ancrage selon la revendication 1, **caractérisé par le fait que** la douille ajourée (9), notamment monobloc, comporte un élément de manipulation (14) faisant saillie au-delà de l'élément (18) de séparation thermique dans la direction longitudinale dudit tirant d'ancrage (29).

3. Tirant d'ancrage selon la revendication 2, **caractérisé par le fait que** l'élément (18) de séparation thermique comporte une dépouille (23) s'étendant dans la direction longitudinale dudit tirant d'ancrage (29), dévolue à la réception de l'élément de manipulation (14).

4. Tirant d'ancrage selon l'une des revendications 1 à 3, **caractérisé par le fait que** l'élément (18) de séparation thermique présente un rétrécissement diamétral périphérique (20).

5. Tirant d'ancrage selon l'une des revendications 1 à 4, **caractérisé par le fait que** l'élément (18) de séparation thermique est doté, sur le pourtour extérieur, d'un élément (21) d'étanchement périphérique.

6. Tirant d'ancrage selon l'une des revendications 1 à 5, **caractérisé par le fait que** l'élément (18) de séparation thermique est réglable axialement par rapport à la tige d'ancrage (17).

7. Ensemble de fixation (1) comprenant
- une base de fixation (4),
- une couche (5) d'isolation thermique, mise en place sur ladite base de fixation (4),
- une partie structurelle rapportée (2),
- un tirant d'ancrage (29) conforme à l'une des revendications 1 à 6, muni d'une tige d'ancrage (17) ancrée dans ladite base de fixation (4), et d'un élément (18) de séparation thermique qui est relié à ladite tige d'ancrage (17), et
- une pièce de rattachement (24) traversant un trou (7) pratiqué dans ladite partie structurelle rapportée (2), et reliée audit élément (18) de séparation thermique, **caractérisé par le fait que** le diamètre extérieur maximal (d_{T}) de l'élément de séparation thermique est inférieur ou égal au diamètre (d_{L}) du trou, pour l'essentiel sur l'intégralité de la longueur.

8. Ensemble de fixation selon la revendication 7, **caractérisé par le fait que** l'élément (18) de séparation thermique est disposé dans la région de la partie structurelle rapportée (2).

9. Ensemble de fixation selon la revendication 7 ou 8, **caractérisé par le fait que** l'élément (18) de séparation thermique est disposé dans la région de la couche (5) d'isolation thermique.

10. Ensemble de fixation selon l'une des revendications 7 à 9, **caractérisé par le fait qu'**un enduit (6) est appliqué sur la couche (5) d'isolation thermique ; et **par le fait qu'**une garniture d'étanchement, s'étendant autour du tirant d'ancrage (29), est interposée entre ledit enduit (6) et la partie structurelle rapportée (2).
